# EUROPÄISCHE PATENTSCHRIFT

(11) **EP 3 724 045 B1**
(45) Veröffentlichungstag und Bekanntmachung des Hinweises auf die Patenterteilung: **05.01.2022**
(21) Anmeldenummer: 18812072.9
(22) Anmeldetag: 15.11.2018
(51) Int. Cl.: B60T 13/66

(54) **VERFAHREN ZUM BETREIBEN EINER BREMSANLAGE UND BREMSANLAGE**
BRAKE SYSTEM FOR VEHICLES AND METHOD OF OPERATING IT
SYSTÈME DE FREINAGE POUR VÉHICULES ET PROCÉDÉ POUR OPÉRER LE MÊME

(30) Priorität: 14.12.2017 DE 102017222789
(43) Veröffentlichungstag der Anmeldung: 21.10.2020
(73) Patentinhaber: Continental Teves AG & Co. OHG, 60488 Frankfurt am Main (DE)
(72) Erfinder: BILLER, Harald, 60488 Frankfurt am Main (DE)
(74) Vertreter: Continental Corporation
(86) Internationale Anmeldenummer: PCT/EP2018/081389
(87) Internationale Veröffentlichungsnummer: WO 2019/115139

(56) Entgegenhaltungen:
- EP-A1- 2 520 473
- WO-A1-2005/014352
- DE-A1-102011 081 240
- DE-A1-102012 219 390
- DE-A1-102013 203 594

## Beschreibung

Die Erfindung betrifft ein Verfahren zum Betreiben einer Bremsanlage mit hydraulisch betätigbaren Radbremsen, bevorzugt zumindest vier Radbremsen, welche eine elektrisch steuerbare Druckbereitstellungseinrichtung, die mit den Radbremsen trennbar verbunden ist, einen mittels eines Bremspedals betätigbaren Hauptbremszylinder, welcher mit den Radbremsen trennbar verbunden ist, und einen Bremsflüssigkeitsbehälter mit einer ersten und einer zweiten Behälterkammer, welche durch eine erste Schottwand getrennt sind, umfasst, wobei die erste Behälterkammer mit der Druckbereitstellungseinrichtung über einen ersten Anschluss zur Flüssigkeitsentnahme verbunden ist, über den die Druckbereitstellungseinrichtung mit Druckmittel versorgt wird, und die zweite Behälterkammer mit dem Hauptbremszylinder über einen zweiten Anschluss zur Flüssigkeitsentnahme verbunden ist, über den der Hauptbremszylinder mit Druckmittel versorgt wird, wobei ein erster Füllstand in dem Bremsflüssigkeitsbehälter mittels eines ersten Sensorelements ermittelt wird, und ein zweiter Füllstand in dem Bremsflüssigkeitsbehälter mittels eines zweiten Sensorelements ermittelt wird, sowie eine entsprechende Bremsanlage.

Aus der WO 2005/014 352 A1 ist eine Bremsanlage bekannt, welche einen mittels eines Bremspedals betätigbaren Bremsdruckgeber, einen Druckmittelvorratsbehälter und mindestens eine elektrohydraulische Druckquelle umfasst. Der Druckmittelvorratsbehälter umfasst eine erste und eine zweite Kammer, wobei die Druckquelle an die erste Kammer angeschlossen ist und der Bremsdruckgeber an die zweite Kammer. Durch die Trennung des Bremsdruckgebers und der Druckquelle soll während einer "brake-by-wire" Betriebsart ein komfortables Pedalgefühl vermittelt werden. Es sind Mittel zur Ermittlung des Druckmittelniveaus in der ersten und zweiten Kammer vorgesehen.

In der DE 101 47 181 A1 ist eine Füllstandsmessvorrichtung für einen Druckmittelvorratsbehälter beschrieben.

Der bekannte Stand der Technik hat den Nachteil, dass zwar das Druckmittelniveau überwacht werden kann, jedoch im Falle eines Druckmittelverlustes unbekannt bleibt, wodurch bzw. wo dieser aufgetreten ist und wie ein weiterer Verlust verhindert werden kann. Es ist daher nicht möglich, das Bremssystem nach einem festgestellten Druckmittelverlust sicher zu betreiben.

Es ist daher Aufgabe der Erfindung, ein Verfahren sowie eine Bremsanlage anzugeben, mittels welchem ein weiterer sicherer Betrieb (Sicherstellung einer Bremswirkung) der Bremsanlage nach Feststellung eines Absinkens der Bremsflüssigkeit in dem Behälter, bspw. aufgrund einer Leckage unbekannten Ursprungs, erfolgen kann. Insbesondere soll ermöglicht werden, festzustellen, welche Abschnitte der Bremsanlage weiter sicher betrieben werden können. Der Betrieb der Bremsanlage erfolgt dann unter Verwendung dieser Abschnitte.

Diese Aufgabe wird durch ein Verfahren gemäß Anspruch 1 sowie eine Bremsanlage gemäß Anspruch 16 oder 19 gelöst.

Erfindungsgemäß wird die Bremsanlage in einem ersten Rückfallbetriebsmodus betrieben, wenn der bestimmte erste Füllstand in dem Bremsflüssigkeitsbehälter unter einen ersten vorgegebenen Pegel fällt. Die Bremsanlage wird in einem zweiten Rückfallbetriebsmodus betrieben, wenn der bestimmte zweite Füllstand in dem Bremsflüssigkeitsbehälter unter einen zweiten vorgegebenen Pegel fällt, wobei der zweite Pegel niedriger als der erste Pegel ist. Dies hat den Vorteil, dass die Betriebsart der Bremsanlage an die aufgetretene Leckage angepasst wird.

Bevorzugt erfasst das erste Sensorelement den ersten Füllstand in einem ersten Bereich, wobei der erste Bereich sich oberhalb der ersten Schottwand befindet. Die erste und zweite Behälterkammer sind oberhalb der ersten Schottwand miteinander verbunden. Das erste Sensorelement erfasst somit den Füllstand in dem gesamten Bremsflüssigkeitsbehälter.

Bevorzugt erfasst das zweite Sensorelement den zweiten Füllstand in einem zweiten Bereich, wobei der zweite Bereich sich in der zweiten Behälterkammer befindet. Der zweite Bereich befindet sich also auf einer Höhe, auf der die erste und die zweite Behälterkammer durch die erste Schottwand getrennt sind, und das zweite Sensorelement erfasst den Füllstand nur innerhalb der zweiten Behälterkammer.

Nach einer ersten bevorzugten Ausführungsform der Erfindung sind das erste und das zweite Sensorelement getrennt ausgeführt.

Nach einer zweiten, alternativen bevorzugten Ausführungsform der Erfindung sind das erste und zweite Sensorelement in einer gemeinsamen Sensorvorrichtung angeordnet. Beispielsweise besteht die Sensorvorrichtung aus mindestens zwei Reedkontakten, welche als Sensorelemente fungieren, und einem gemeinsamen Schwimmer mit einem integrierten Magneten, dessen Position durch die Reedkontakte erfasst wird. Dies hat den Vorteil, dass die Sensorvorrichtung preisgünstig und platzsparend ist.

Bevorzugt wird in dem ersten Rückfallbetriebsmodus die Druckbereitstellungseinrichtung von den Radbremsen getrennt und der Hauptbremszylinder mit den Radbremsen verbunden, so dass Bremsdruck in den Radbremsen durch den Hauptbremszylinder bereitgestellt wird. Besonders bevorzugt erfolgt dies bei einer Betätigung des Bremspedals durch den Fahrer, also einer Anforderung von Bremsdruck durch den Fahrer.

Bevorzugt wird in dem zweiten Rückfallbetriebsmodus der Hauptbremszylinder von den Radbremsen getrennt und die Druckbereitstellungseinrichtung mit zumindest einem Teil der Radbremsen verbunden und Bremsdruck zur Betätigung des Teils der Radbremsen durch die Druckbereitstellungseinrichtung bereitgestellt. Unter zumindest einem Teil der Radbremsen wird dabei eine Untermenge der Radbremsen oder die Menge aller Radbremsen (bspw. erste, zweite, dritte und vierte Radbremse) verstanden. Besonders bevorzugt erfolgt dies bei einer Betätigung des Bremspedals durch den Fahrer, also einer Anforderung von Bremsdruck durch den Fahrer.

Bevorzugt sind in dem zweiten Rückfallbetriebsmodus eine erste und eine zweite Radbremse von der Druckbereitstellungseinrichtung hydraulisch abgetrennt. So kann ein Druckmittelverlust bei einer Leckage im Bereich der ersten oder zweiten Radbremse verhindert werden.

Bevorzugt ist in dem zweiten Rückfallbetriebsmodus eine erste Radbremse von der Druckbereitstellungseinrichtung hydraulisch abgetrennt. So kann ein Druckmittelverlust bei einer Leckage im Bereich der ersten Radbremse verhindert werden.

Nach einer bevorzugten Ausführungsform der Erfindung umfasst der Hauptbremszylinder einen ersten und einen zweiten Druckraum, wobei der zweite Druckraum mit dem zweiten Anschluss verbunden ist. Der Bremsflüssigkeitsbehälter umfasst eine dritte Behälterkammer, welche durch eine zweite Schottwand abgetrennt ist, wobei der erste Druckraum über einen Anschluss zur Flüssigkeitsentnahme mit der dritten Behälterkammer verbunden ist, und ein dritter Füllstand wird in dem Bremsflüssigkeitsbehälter mittels eines dritten Sensorelements erfasst.

Vorteilhafterweise ist der erste Druckraum mit einem ersten Bremskreis trennbar verbunden, wobei zumindest eine der Radbremsen an den ersten Bremskreis angeschlossen ist. Der zweite Druckraum ist mit einem zweiten Bremskreis trennbar verbunden, wobei zumindest eine andere der Radbremsen an den zweiten Bremskreis angeschlossen ist. Die Druckbereitstellungseinrichtung ist mit dem ersten Bremskreis und mit dem zweiten Bremskreis trennbar verbunden.

Besonders bevorzugt sind an dem ersten Bremskreis eine erste und eine zweite Radbremse der Radbremsen und an den zweiten Bremskreis eine dritte und vierte Radbremse der Radbremsen angeschlossen.

Bevorzugt erfasst das dritte Sensorelement den dritten Füllstand in einem dritten Bereich, wobei der dritte Bereich sich in der dritten Behälterkammer befindet. Der dritte Bereich ist also auf einer Höhe, auf der die dritte Behälterkammer durch die zweite Schottwand von den anderen Behälterkammern (erste und zweite Behälterkammer) abgetrennt ist, und das dritte Sensorelement erfasst infolgedessen den Füllstand nur innerhalb der dritten Behälterkammer.

Vorteilhafterweise befindet sich der erste Bereich auch oberhalb der zweiten Schottwand. Hierdurch erfasst das erste Sensorelement den Füllstand in dem gesamten Bremsflüssigkeitsbehälter oberhalb der Schottwände.

Vorteilhafterweise wird die Bremsanlage in dem zweiten Rückfallbetriebsmodus betrieben, wenn der bestimmte dritte Füllstand in dem Bremsflüssigkeitsbehälter unter einen dritten vorgegebenen Pegel fällt.

Bevorzugt wird in dem zweiten Rückfallbetriebsmodus der erste Bremskreis von der Druckbereitstellungseinrichtung hydraulisch abgetrennt, falls der bestimmte dritte Füllstand in dem Bremsflüssigkeitsbehälter unter den dritten vorgegebenen Pegel fällt, und der zweite Bremskreis wird von der Druckbereitstellungseinrichtung hydraulisch abgetrennt, falls der bestimmte zweite Füllstand in dem Bremsflüssigkeitsbehälter unter den zweiten vorgegebenen Pegel fällt.

Bevorzugt werden in dem ersten Rückfallbetriebsmodus alle diejenigen Regelfunktionen abgeschaltet, durch welche Druckmittel von einer der Behälterkammern in eine andere der Behälterkammern überführt wird. Hierdurch wird ein geschlossener Kreislauf pro Behälterkammer sichergestellt und ein weiterer Verlust von Druckmittel verhindert.

Bevorzugt werden in dem zweiten Rückfallbetriebsmodus alle diejenigen Regelfunktionen abgeschaltet, durch welche Druckmittel von einer der Behälterkammern in eine andere der Behälterkammern überführt wird.

Vorteilhafterweise wird eine Warnung an den Fahrer ausgegeben, wenn der erste Füllstand in dem Bremsflüssigkeitsbehälter unter den ersten Pegel fällt, und eine weitere Warnung an der Fahrer ausgegeben, wenn der zweite Füllstand unter den zweiten Pegel fällt oder der dritte Füllstand unter den dritten Pegel fällt. Insbesondere weist die Warnung den Fahrer darauf hin, dass das Bremssystem eine Leckage aufweist und eine Wartung nötig ist.

Die Erfindung betrifft auch eine Bremsanlage, in der ein erfindungsgemäßes Verfahren durchgeführt wird.

Weiterhin betrifft die Erfindung eine Bremsanlage, in der das erste Sensorelement (71) sich oberhalb der ersten Schottwand (64) befindet und das zweite Sensorelement (72) sich in der zweiten Behälterkammer (62) befindet.

Weitere bevorzugte Ausführungsformen der Erfindung ergeben sich aus den Unteransprüchen und der nachfolgenden Beschreibung anhand von Figuren.

Es zeigen:
- Fig. 1: eine beispielgemäße Bremsanlage,
- Fig. 2: den Bremsflüssigkeitsbehälter der Fig. 1 im Detail,
- Fig. 3: ein Ablaufschema eines beispielgemäßen Verfahrens.

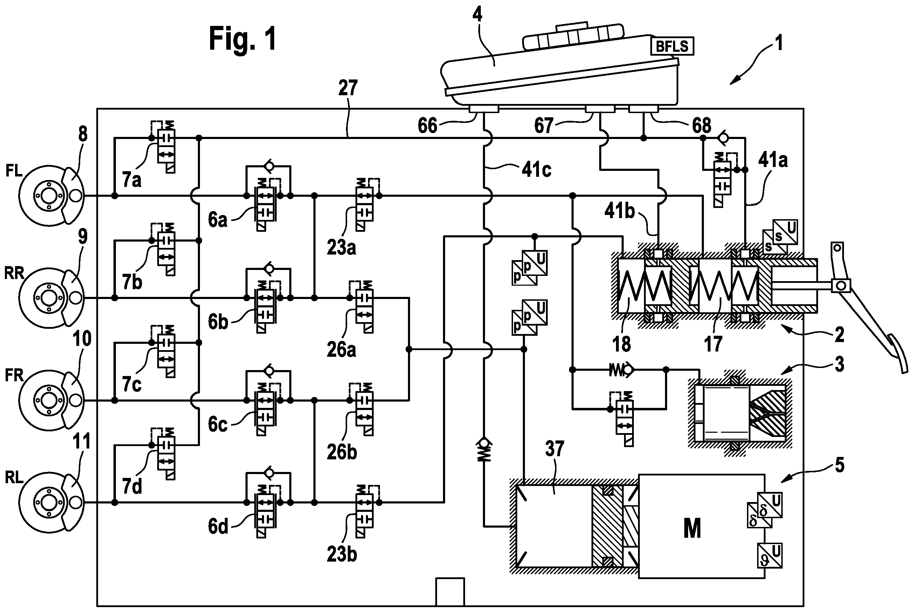

In Figur 1 ist ein Ausführungsbeispiel einer erfindungsgemäßen Bremsanlage für ein Kraftfahrzeug gezeigt. Die Bremsanlage umfasst einen Hauptbremszylinder 2 mit zwei Druckräumen 17 und 18. Der Hauptbremszylinder 2 wird über ein Bremspedal vom Fahrer des Kraftfahrzeugs betätigt. Der Hauptbremszylinder 2 ist an einen Druckmittelvorratsbehälter 4 angeschlossen und wird aus diesem mit Druckmittel versorgt. Dabei verfügt jeder der Druckräume 17, 18 über einen eigenen Anschluss 67, 68 an den Druckmittelvorratsbehälter 4.

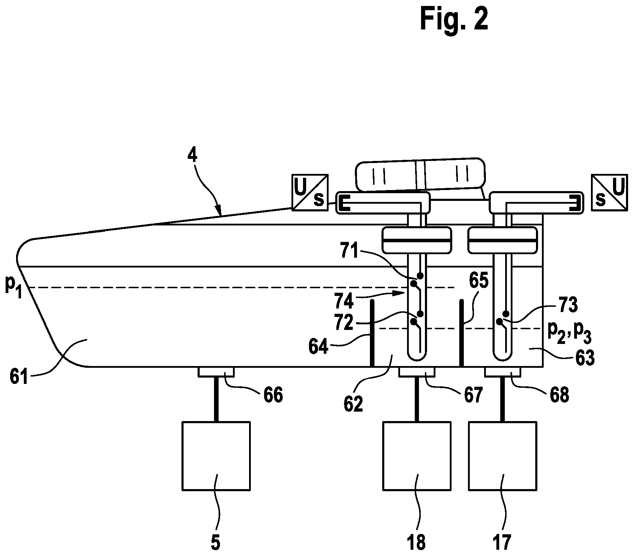

Der Druckmittelvorratsbehälter 4 ist im Detail in Figur 2 gezeigt.

Der erste Druckraum 17 des Hauptbremszylinders 2 ist über ein erstes Trennventil 23a mit einem ersten Bremskreis verbunden, an welchen die erste und die zweite Radbremse 10, 11 angeschlossen sind. Das erste Trennventil 23a ist beispielsgemäß stromlos offen ausgeführt. Zweckmäßigerweise sind die erste und zweite Radbremse 8, 9 dabei über je ein Einlassventil 6a, 6b angeschlossen.

Der zweite Druckraum 18 des Hauptbremszylinders 2 ist über ein zweites Trennventil 23b mit einem zweiten Bremskreis verbunden, an welchen die dritte und die vierten Radbremse 10, 11 angeschlossen sind. Das zweite Trennventil 23b ist beispielsgemäß stromlos offen ausgeführt. Zweckmäßigerweise sind die dritte und vierte Radbremse 10, 11 dabei über je ein Einlassventil 6c, 6d angeschlossen.

Die Bremsanlage umfasst auch eine Druckbereitstellungseinrichtung 5. Die Druckbereitstellungseinrichtung 5 umfasst beispielsgemäß einen Motor, mittels dessen ein Kolben in einem hydraulischen Druckbereitstellungseinrichtungs-Druckraum 37 (DBE-Druckraum) verschoben werden kann, wodurch ein Druck aufgebaut werden kann. Die Druckbereitstellungseinrichtung 5 ist über eine Verbindung 41c an den Druckmittelvorratsbehälter 4 angeschlossen und wird aus diesem mit Druckmittel versorgt.

Die Druckbereitstellungseinrichtung 5 ist beispielsgemäß über ein erstes Zuschaltventil 26a mit der ersten und zweiten Radbremse 8, 9 trennbar verbunden und über ein zweites Zuschaltventil 26b mit der dritten und der vierten Radbremse 10, 11 trennbar verbunden.

Die Bremsanlage kann beispielsgemäß in einem Normalbetrieb betreiben werden, der einem sog. "by-wire"-Betrieb entspricht. Im Normalbetrieb werden das erste und das zweite Trennventil 23a, 23b geschlossen, so dass der Hauptbremszylinder 2 von den Radbremsen 8, 9, 11, 11 entkoppelt ist. Die Zuschaltventile 26a, 26b werden geöffnet und Druck in den Radbremsen wird durch die Druckbereitstellungseinrichtung 5 erzeugt.

Ein Druckaufbau durch die Druckbereitstellungseinrichtung 5 kann im Normalbetrieb auch unabhängig von einer Betätigung des Bremspedals durchgeführt werden.

Bremsdruck kann durch Öffnen von Auslassventilen 7a, 7b, 7c, 7d, über welche die Radbremsen 8, 9, 10, 11 mit einer gemeinsamen Rücklaufleitung 27 und darüber mit dem Druckmittelvorratsbehälter 4 verbunden sind, aus den Radbremsen 8, 9, 10, 11 abgebaut werden.

Alternativ können getrennte Rücklaufleitungen vorgesehen sein (nicht dargestellt), wobei vorteilhafterweise die erste und zweite Radbremse 8, 9 an eine erste Rücklauf leitung angeschlossen sind und die dritte und vierte Radbremse 10, 11 an eine zweite Rücklaufleitung angeschlossen sind. Die Rücklaufleitungen sind an unterschiedliche Kammern des Bremsflüssigkeitsbehälters angeschlossen.

Die Einlassventile 6a, 6b, 6c, 6d sind einzeln schaltbar zum Einstellen unterschiedlicher Drücke in den Radbremsen. Es können mit der Bremsanlage an sich bekannte Brems-Regelfunktionen durchgeführt werden (bspw. EBV, ABS, ASR, ESC, ACC, etc.).

Die Bremsanlage kann in einem ersten Rückfallbetriebsmodus betrieben werden. Hierzu wird beispielsgemäß die Druckbereitstellungseinrichtung 5 von den Radbremsen 8, 9, 10, 11 getrennt, indem die Zuschaltventile 26a, 26b geschlossen werden. Der Hauptbremszylinder 2 wird mit den Radbremsen 8, 9, 10, 11 verbunden, indem die Trennventile 23a, 23b geöffnet werden, so dass Bremsdruck in den Radbremsen 8, 9, 10, 11 durch den Hauptbremszylinder 2 bereitgestellt wird. Die Druckbereitstellungseinrichtung 5 wird hierbei nicht zum Druckaufbau verwendet.

Weiter kann die Bremsanlage auch in einem zweiten Rückfallbetriebsmodus betrieben werden, in dem beispielsgemäß der Hauptbremszylinder 2 von den Radbremsen 8, 9, 10, 11 durch Schließen der Trennventile 23a, 23b getrennt wird und die Druckbereitstellungseinrichtung 5 mit zumindest einem Teil der Radbremsen verbunden wird, indem das erste Zuschaltventil 26a und/oder das zweite Zuschaltventil 26b geöffnet wird. Bremsdruck zur Betätigung des Teils der Radbremsen wird durch die Druckbereitstellungseinrichtung 5 bereitgestellt. Dabei wird Bremsdruck in der ersten und zweiten Radbremse 8, 9 durch die Druckbereitstellungseinrichtung bereitgestellt, indem das erste Zuschaltventil 26a geöffnet wird, oder Bremsdruck in der dritten und vierten Radbremse 10, 11 durch die Druckbereitstellungseinrichtung bereitgestellt, indem das zweite Zuschaltventil 26b geöffnet wird, oder Druck in allen vier Radbremsen bereitgestellt, indem sowohl das erste als auch das zweite Zuschaltventil 26a, 26b geöffnet werden. Je nach Ausführung der Zuschaltventile kann es vorteilhaft sein, mit einem Zuschaltventil zugleich die jeweils zugehörigen Einlassventile zu schließen. Vorteilhaft ist das insbesondere dann, wenn ein Druck in der Druckbereitstellungseinrichtung öffnend auf die Zuschaltventile wirkt.

Die erste und zweite Radbremse 8, 9 sind beispielsgemäß an unterschiedlichen Fahrzeugseiten angeordnet, vorteilhafterweise auf einer Diagonalen. Dementsprechend sind die dritte und vierte Radbremse 10, 11 auch auf unterschiedlichen Fahrzeugseiten angeordnet. Beispielsweise handelt es sich bei der dritten Radbremse 10 um die vordere rechte Radbremse (FR), bei der vierten Radbremse 11 um die hintere linke (RL) Radbremse, bei der ersten Radbremse 8 um die vordere linke Radbremse (FL), und bei der zweiten Radbremse 9 um die hintere rechte Radbremse (RR). Andere Anordnungen sind ebenfalls möglich.

Im ersten und im zweiten Rückfallbetriebsmodus werden beispielsgemäß die Auslassventile 7a, 7b, 7c, 7d der Radbremsen geschlossen gehalten, so dass ein Verschieben von Druckmittel zwischen den Kammern des Druckmittelvorratsbehälters 4 und somit zwischen den Bremskreisen unterbunden wird. Regelfunktionen, welche ein Öffnen der Auslassventile veranlassen, werden beispielsgemäß abgeschaltet.

Sind getrennte Rücklaufleitungen vorgesehen, so können Regelfunktionen, welche ein Öffnen der Auslassventile erfordern, teilweise angeschaltet bleiben, wenn durch sie kein Verschieben von Druckmittel zwischen den Kammern des Druckmittelvorratsbehälters 18 verursacht wird. Weil dem Fahrer ein Lösen und Nachtreten nicht zugemutet werden soll, werden allerdings bevorzugt im ersten Rückfallbetriebsmodus nur solche Regelfunktionen angeschaltet bleiben, durch die nur ein kleiner Teil des Druckmittels im Hauptbremszylinder verbraucht wird, im Wesentlichen also die elektronische Bremskraftverteilung EBV.

Figur 2 zeigt einen beispielgemäßen Bremsflüssigkeitsbehälter 4, welcher zur Durchführung des erfindungsgemäßen Verfahrens geeignet ist. Der Bremsflüssigkeitsbehälter ist beispielsgemäß Teil einer Bremsanlage wie in Figur 1 gezeigt.

Beispielsgemäß umfasst der Bremsflüssigkeitsbehälter 4 drei Behälterkammern, welche durch Schottwände abgetrennt sind. Die erste Behälterkammer 61 ist dabei durch die Schottwand 64 von der zweiten Behälterkammer 62 abgetrennt. Die zweite Behälterkammer 62 ist durch die zweite Schottwand 65 von der dritten Behälterkamme 63 abgetrennt. Oberhalb der Schottwände sind die Behälterkammern verbunden. Vorteilhafterweise sind die Behälterkammern somit verbunden, wenn der Füllstand oberhalb der Schottwände ist, und getrennt, sobald der Füllstand unterhalb der Oberkanten der Schottwände absinkt.

Jede der Behälterkammern 61, 62, 63 verfügt über einen Anschluss zur Flüssigkeitsentnahme 66, 67, 68.

Die erste Behälterkammer 61 ist über einen ersten Anschluss 66 zur Flüssigkeitsentnahme mit der Druckbereitstellungseinrichtung 5 verbunden. Die zweite Behälterkammer 62 ist über einen zweiten Anschluss 67 zur Flüssigkeitsentnahme mit dem zweiten Druckraum 18 des Hauptbremszylinders verbunden. Die dritte Behälterkammer 63 ist über einen dritten Anschluss 68 zur Flüssigkeitsentnahme mit dem ersten Druckraum 17 des Hauptbremszylinders verbunden.

Ein erstes Sensorelement 71 ist oberhalb der Schottwände 64, 65 angeordnet und erfasst den Füllstand in dem gesamten Bremsflüssigkeitsbehälter. Ein zweites Sensorelement 72 ist in der zweiten Behälterkammer 62 angeordnet und erfasst den Füllstand in der zweiten Behälterkammer 62.

Beispielsgemäß sind das erste und das zweite Sensorelement 71, 72 in einer gemeinsamen Sensorvorrichtung 74 angeordnet.

Ein drittes Sensorelement 73 ist in der dritten Behälterkammer 63 angeordnet und erfasst den Füllstand in der dritten Behälterkammer. Alternativ können das erste und das dritte Sensorelement in einer gemeinsamen Sensorvorrichtung angeordnet sein.

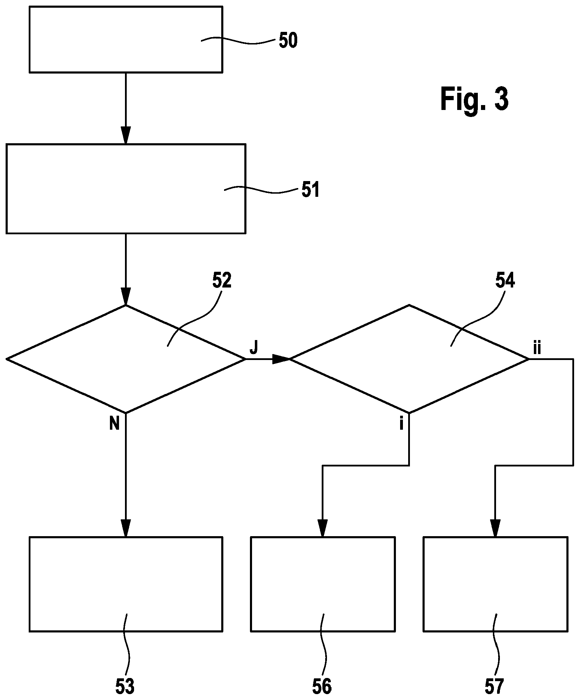

In Figur 3 ist ein Ablaufschema eines beispielgemäßen Verfahrens gezeigt.

In Schritt 50 wird mittels eines ersten Sensorelements 71 ermittelt, dass der Füllstand im Bremsflüssigkeitsbehälter 4 unter einen Grenzwert abgesunken ist. In Schritt 51 wird nun der Fahrer gewarnt und die Bremsanlage wird im ersten Rückfallbetriebsmodus betrieben.

Im ersten Rückfallbetriebsmodus wird die Druckbereitstellungseinrichtung 5 durch Schließen der Zuschaltventile 26a, 26b von den Radbremsen 8, 9, 10, 11 getrennt und Druck in den Radbremsen 8, 9, 10, 11 wird mittels des Hauptbremszylinders 2 bereitgestellt. Dabei wird Druck im ersten Bremskreis durch den ersten Druckraum 17 und Druck im zweiten Bremskreis durch den zweiten Druckraum 18 bereitgestellt.

In einem Schritt 52 wird überwacht, ob der Füllstand unter einen zweiten oder dritten vorgegebenen Pegel fällt, d.h. ob ein weiteres Absinken des Füllstandes festgestellt wird. Hierzu wird ein zweiter Füllstand in der zweiten Kammer 62 des Bremsflüssigkeitsbehälters 4 mittels eines zweiten Sensorelements 72 ermittelt sowie ein dritter Füllstand in der dritten Kammer 63 des Bremsflüssigkeitsbehälters 4 mittels eines dritten Sensorelements 73 ermittelt. Solange weder der zweite Füllstand unter einen zweiten Grenzwert noch der dritte Füllstand unter einen dritten Grenzwert fallen, wird das Bremssystem weiter im ersten Rückfallbetriebsmodus betrieben.

Fallen entweder der zweite Füllstand unter den zweiten Grenzwert oder der dritte Füllstand unter den dritten Grenzwert, so wird mit Schritt 54 fortgefahren. Der Fahrer wird weiterhin bzw. erneut gewarnt.

In Schritt 54 wird festgestellt, welcher der Füllstände (zweiter oder dritter) unter den respektiven Grenzwert gefallen ist. Ist der dritte Füllstand unter den dritten Grenzwert gefallen, so wird eine Leckage innerhalb des ersten Bremskreises angenommen und mit Schritt 56 fortgefahren. Ist der zweite Füllstand unter den zweiten Grenzwert gefallen, so wird eine Leckage innerhalb des zweiten Bremskreises angenommen und mit Schritt 57 fortgefahren.

In Schritt 56 geht die Bremsanlage in den zweiten Rückfallbetriebsmodus über, wobei Druck durch die Druckbereitstellungseinrichtung 5 bereitgestellt wird und der erste Bremskreis mittels Schalten des ersten Zuschaltventils 26a und ggf. der zugehörigen Einlassventile 6a, 6b von der Druckbereitstellungseinrichtung 5 abgetrennt wird.

In Schritt 57 geht die Bremsanlage in den zweiten Rückfallbetriebsmodus über, wobei Druck durch die Druckbereitstellungseinrichtung 5 bereitgestellt wird und der zweite Bremskreis mittels Schalten des zweiten Zuschaltventils 26b und ggf. der zugehörigen Einlassventile 6c, 6d von der Druckbereitstellungseinrichtung 5 abgetrennt wird.

Der Rückfallbetrieb der Bremsanlage wird aufrechterhalten, bis eine Wartung der Bremsanlage bzw. Reparatur der Leckage vorgenommen wird.

Nachfolgend wird ein weiteres beispielgemäßes Verfahren beschrieben.

Es sind eine zweites und ein drittes Sensorelement (bspw. Behälterwarneinrichtung) vorhanden, die den Behälterkammern 62, 63, aus welchen der Hauptbremszylinder 2 versorgt wird, zugeordnet sind und erst ansprechen, wenn der Flüssigkeitsstand in der jeweiligen Behälterkammer 62, 63 deutlich unter die Schottwände 64, 65 abgesunken ist.

Vorteilhafterweise wird das erste Sensorelement 71 mit einer der beiden zusätzlichen Sensorelemente 72, 73 zusammengefasst. Es liegt also bevorzugt eine einstufige Sensorvorrichtung für eine der beiden Behälterkammern 63 und eine zweistufige Sensorvorrichtung vor, deren zweite Stufe 72 den Flüssigkeitsstand in der anderen Behälterkammer 62 und deren erste Stufe 71 einen Flüssigkeitsstand oberhalb der Schottwände 64, 65 des Behälters 4 überwacht.

Die Betriebsstrategie zur Vermeidung der Rückfallebene mit Kreisausfall ist wie folgt. Wenn durch eine äußere Leckage der Stand der Bremsflüssigkeit im Bremsflüssigkeitsbehälter 4 unter die obere Warnschwelle p₁ fällt, wird der Fahrer rot bewarnt, und das Bremssystem geht in eine hydraulische Rückfallebene über, in der eine Druckbereitstellung in den Radbremsen 8, 9, 10, 11 über den Hauptbremszylinder 2 erfolgt. Die beiden Bremskreise stehen zu diesem Zeitpunkt noch sicher zur Verfügung. Die elektronische Bremskraftverteilung (EBV) und alle höheren Regelfunktionen werden abgeschaltet, weil über die gemeinsame Rücklaufleitung 27 der vier Auslassventile Bremsflüssigkeit zwischen den Kreisen verschoben wird. Alternativ kann die EBV aufrechterhalten werden, wenn der hydraulische Schaltplan von Figur 1 so geändert wird, dass die gemeinsame Rücklaufleitung 27 der Auslassventile entfällt und jedes Auslassventil mit der zugehörigen Behälterkammer verbunden wird. Vorzugsweise werden dazu die Auslassventile 7a, 7b der ersten und zweiten Radbremse 8, 9 über eine erste Rücklauf leitung mit dem dritten Anschluss 68 verbunden und die Auslassventile 7c, 7d der dritten und vierten Radbremse 10, 11 über eine zweite Rücklaufleitung mit dem zweiten Anschluss 67 verbunden.

Für gewisse äußere Leckagen (zum Beispiel über die Manschette der Druckbereitstellungseinrichtung, welche als Linearaktuator ausgeführt ist) sinkt der Flüssigkeitsstand im Bremsflüssigkeitsbehälter 4 nicht weiter ab. Falls der Flüssigkeitsstand aber auch in einer der beiden Behälterkammern 62, 63 unter die untere Warnschwelle p₂, p₃ fällt, geht das System wieder in einen By-wire-Betrieb über, wobei die Einlassventile und das Zuschaltventil in dem Kreis mit dem niedrigen Flüssigkeitsstand geschlossen werden. Alle Regelfunktionen werden abgeschaltet. Durch das Schließen der Einlassventile und des Zuschaltventils wird ein weiterer Flüssigkeitsverlust vermieden. Der verstärkte einkreisige Betrieb mit roter Fahrerwarnung kann bis zur Reparatur aufrechterhalten werden.

## Patentansprüche

1. Verfahren zum Betreiben einer Bremsanlage (1) mit hydraulisch betätigbaren Radbremsen (8, 9, 10, 11), welche eine elektrisch steuerbare Druckbereitstellungseinrichtung (5), die mit den Radbremsen (8, 9, 10, 11) trennbar verbunden ist, einen mittels eines Bremspedals betätigbaren Hauptbremszylinder (2), welcher mit den Radbremsen (8, 9, 10, 11) trennbar verbunden ist, und einen Bremsflüssigkeitsbehälter (4) mit einer ersten und einer zweiten Behälterkammer (61, 62), welche durch eine erste Schottwand (64) getrennt sind, umfasst, wobei die erste Behälterkammer (61) mit der Druckbereitstellungseinrichtung (5) über einen ersten Anschluss (66) zur Flüssigkeitsentnahme verbunden ist, über den die Druckbereitstellungseinrichtung (5) mit Druckmittel versorgt wird, und die zweite Behälterkammer (62) mit dem Hauptbremszylinder (2) über einen zweiten Anschluss (67) zur Flüssigkeitsentnahme verbunden ist, über den der Hauptbremszylinder (2) mit Druckmittel versorgt wird, wobei ein erster Füllstand in dem Bremsflüssigkeitsbehälter (4) mittels eines ersten Sensorelements (71) ermittelt wird, und ein zweiter Füllstand in dem Bremsflüssigkeitsbehälter (4) mittels eines zweiten Sensorelements (72) ermittelt wird,
**dadurch gekennzeichnet, dass** die Bremsanlage (1) in einem ersten Rückfallbetriebsmodus (51) betrieben wird, wenn der bestimmte erste Füllstand in dem Bremsflüssigkeitsbehälter (4) unter einen ersten vorgegebenen Pegel (p₁) fällt (50), und dass die Bremsanlage (1) in einem zweiten Rückfallbetriebsmodus (56, 57) betrieben wird, wenn der bestimmte zweite Füllstand in dem Bremsflüssigkeitsbehälter unter einen zweiten vorgegebenen Pegel (p₂) fällt (52), wobei der zweite Pegel (p₂) niedriger als der erste Pegel (p1) ist.

2. Verfahren nach Anspruch 1, **dadurch gekennzeichnet, dass** das erste Sensorelement (71) den ersten Füllstand in einem ersten Bereich erfasst, wobei der erste Bereich sich oberhalb der ersten Schottwand (64) befindet.

3. Verfahren nach Anspruch 1 oder 2, **dadurch gekennzeichnet, dass** das zweite Sensorelement (72) den zweiten Füllstand in einem zweiten Bereich erfasst, wobei der zweite Bereich sich in der zweiten Behälterkammer (62) befindet.

4. Verfahren nach einem der vorhergehenden Ansprüche, **dadurch gekennzeichnet, dass** das erste und das zweite Sensorelement (71, 72) getrennt ausgeführt sind oder dass das erste und zweite Sensorelement (71, 72) in einer gemeinsamen Sensorvorrichtung (74) angeordnet sind.

5. Verfahren nach einem der vorhergehenden Ansprüche, **dadurch gekennzeichnet, dass** in dem ersten Rückfallbetriebsmodus die Druckbereitstellungseinrichtung (5) von den Radbremsen (8, 9, 10, 11) getrennt wird und der Hauptbremszylinder (2) mit den Radbremsen (8, 9, 10, 11) verbunden wird, so dass Bremsdruck in den Radbremsen (8, 9, 10, 11) durch den Hauptbremszylinder (2) bereitgestellt wird.

6. Verfahren nach einem der vorhergehenden Ansprüche, **dadurch gekennzeichnet, dass** in dem zweiten Rückfallbetriebsmodus der Hauptbremszylinder (2) von den Radbremsen (8, 9, 10, 11) getrennt wird und die Druckbereitstellungseinrichtung (5) mit zumindest einem Teil der Radbremsen (8, 9 oder 10, 11) verbunden wird und Bremsdruck zur Betätigung des Teils der Radbremsen durch die Druckbereitstellungseinrichtung (5) bereitgestellt wird.

7. Verfahren nach einem der vorhergehenden Ansprüche, **dadurch gekennzeichnet, dass** in dem zweiten Rückfallbetriebsmodus eine erste und/oder eine zweite Radbremse (8, 9) der Radbremsen von der Druckbereitstellungseinrichtung (5) hydraulisch abgetrennt sind.

8. Verfahren nach einem der vorhergehenden Ansprüche, **dadurch gekennzeichnet, dass** der Hauptbremszylinder (2) einen ersten und einen zweiten Druckraum (17, 18) umfasst, wobei der zweite Druckraum (18) mit dem zweiten Anschluss (67) verbunden ist, dass der Bremsflüssigkeitsbehälter (4) eine dritte Behälterkammer (63) umfasst, welche durch eine zweite Schottwand (65) abgetrennt ist, wobei der erste Druckraum (17) über einen dritten Anschluss (68) zur Flüssigkeitsentnahme mit der dritten Behälterkammer (63) verbunden ist, und dass ein dritter Füllstand in dem Bremsflüssigkeitsbehälter mittels eines dritten Sensorelements (73) erfasst wird.

9. Verfahren nach Anspruch 8, **dadurch gekennzeichnet, dass** der erste Druckraum (17) mit einem ersten Bremskreis trennbar verbunden ist, wobei zumindest eine der Radbremsen an den ersten Bremskreis angeschlossen ist, und dass der zweite Druckraum (18) mit einem zweiten Bremskreis trennbar verbunden ist, wobei zumindest eine andere der Radbremsen an den zweiten Bremskreis angeschlossen ist, und dass die Druckbereitstellungseinrichtung (5) mit dem ersten Bremskreis trennbar verbunden ist und die Druckbereitstellungseinrichtung (5) mit dem zweiten Bremskreis trennbar verbunden ist.

10. Verfahren nach Anspruch 8 oder 9, **dadurch gekennzeichnet, dass** das dritte Sensorelement (73) den dritten Füllstand in einem dritten Bereich erfasst, wobei der dritte Bereich sich in der dritten Behälterkammer (63) befindet.

11. Verfahren nach einem der Ansprüche 8 bis 10, wenn rückbezogen auf Anspruch 2, **dadurch gekennzeichnet, dass** der erste Bereich sich oberhalb der zweiten Schottwand (65) befindet.

12. Verfahren nach einem der Ansprüche 9 bis 11, **dadurch gekennzeichnet, dass** die Bremsanlage (1) in dem zweiten Rückfallbetriebsmodus betrieben wird, wenn der bestimmte dritte Füllstand in dem Bremsflüssigkeitsbehälter unter einen dritten vorgegebenen Pegel (p₃) fällt.

13. Verfahren nach Anspruch 12, **dadurch gekennzeichnet, dass** in dem zweiten Rückfallbetriebsmodus der erste Bremskreis von der Druckbereitstellungseinrichtung (5) hydraulisch abgetrennt wird, falls der bestimmte dritte Füllstand in dem Bremsflüssigkeitsbehälter unter den dritten vorgegebenen Pegel (p₃) fällt, und der zweite Bremskreis von der Druckbereitstellungseinrichtung (5) hydraulisch abgetrennt wird, falls der bestimmte zweite Füllstand in dem Bremsflüssigkeitsbehälter unter den zweiten vorgegebenen Pegel (p₂) fällt.

14. Verfahren nach einem der vorhergehenden Ansprüche, **dadurch gekennzeichnet, dass** in dem ersten Rückfallbetriebsmodus alle diejenigen Regelfunktionen abgeschaltet werden, durch welche Druckmittel von einer der Behälterkammern (61, 62, 63) in eine andere der Behälterkammern (61, 62, 63) überführt wird.

15. Verfahren nach einem der vorhergehenden Ansprüche, **dadurch gekennzeichnet, dass** in dem zweiten Rückfallbetriebsmodus alle diejenigen Regelfunktionen abgeschaltet werden, durch welche Druckmittel von einer der Behälterkammern (61, 62, 63) in eine andere der Behälterkammern überführt wird.

16. Bremsanlage (1) mit hydraulisch betätigbaren Radbremsen (8, 9, 10, 11), welche eine elektrisch steuerbare Druckbereitstellungseinrichtung (5), die mit den Radbremsen (8, 9, 10, 11) trennbar verbunden ist, einen mittels eines Bremspedals betätigbaren Hauptbremszylinder (2), welcher mit den Radbremsen (8, 9, 10, 11) trennbar verbunden ist, und einen Bremsflüssigkeitsbehälter (4) mit einer ersten und einer zweiten Behälterkammer (61, 62), welche durch eine erste Schottwand (64) getrennt sind, umfasst, wobei die erste Behälterkammer (61) mit der Druckbereitstellungseinrichtung (5) über einen ersten Anschluss (66) zur Flüssigkeitsentnahme verbunden ist, über den die Druckbereitstellungseinrichtung (5) mit Druckmittel versorgt wird, und die zweite Behälterkammer (62) mit dem Hauptbremszylinder (2) über einen zweiten Anschluss (67) zur Flüssigkeitsentnahme verbunden ist, über den der Hauptbremszylinder (2) mit Druckmittel versorgt wird, wobei der Bremsflüssigkeitsbehälter (4) ein erstes Sensorelement (71) zur Ermittlung eines ersten Füllstands umfasst, und der Bremsflüssigkeitsbehälter ein zweites Sensorelement (72) zur Ermittlung eines zweiten Füllstands umfasst, **dadurch gekennzeichnet, dass** die Bremsanlage (1) in einem ersten Rückfallbetriebsmodus betrieben wird, wenn der bestimmte erste Füllstand in dem Bremsflüssigkeitsbehälter unter einen ersten vorgegebenen Pegel (p₁) fällt, und dass die Bremsanlage (1) in einem zweiten Rückfallbetriebsmodus betrieben wird, wenn der bestimmte zweite Füllstand in dem Bremsflüssigkeitsbehälter unter einen zweiten vorgegebenen Pegel (p₂) fällt, wobei der zweite Pegel (p₂) niedriger als der erste Pegel (p₁) ist.

17. Bremsanlage nach Anspruch 16, **dadurch gekennzeichnet, dass** ein Verfahren nach einem der Ansprüche 2 bis 15 durchgeführt wird.

18. Bremsanlage (1) nach Anspruch 16, **dadurch gekennzeichnet, dass** der Hauptbremszylinder (2) einen ersten und einen zweiten Druckraum (17, 18) umfasst, wobei der zweite Druckraum (18) mit dem zweiten Anschluss (67) verbunden ist, dass der Bremsflüssigkeitsbehälter (4) eine dritte Behälterkammer (63) umfasst, welche durch eine zweite Schottwand (65) abgetrennt ist, wobei der erste Druckraum (17) über einen dritten Anschluss (68) zur Flüssigkeitsentnahme mit der dritten Behälterkammer (63) verbunden ist, und dass der Bremsflüssigkeitsbehälter (4) ein drittes Sensorelement (73) zur Ermittlung eines dritten Füllstands umfasst und dass der erste Druckraum (17) mit einem ersten Bremskreis über ein erstes Trennventil (23a) trennbar verbunden ist, wobei eine erste und eine zweite Radbremse (8, 9) an den ersten Bremskreis angeschlossen sind, und dass der zweite Druckraum (18) über ein zweites Trennventil (23b) mit einem zweiten Bremskreis trennbar verbunden ist, wobei eine dritte und eine vierte Radbremse (10, 11) an den zweiten Bremskreis angeschlossen sind, und dass die Druckbereitstellungseinrichtung (5) über ein erstes Zuschaltventil (26a) mit dem ersten Bremskreis trennbar verbunden ist und die Druckbereitstellungseinrichtung über ein zweites Zuschaltventil (26b) mit dem zweiten Bremskreis trennbar verbunden ist.

19. Bremsanlage (1) nach einem der Ansprüche 16 bis 18, **dadurch gekennzeichnet, dass** das erste Sensorelement (71) sich oberhalb der ersten Schottwand (64) befindet und dass das zweite Sensorelement (72) sich in der zweiten Behälterkammer (62) befindet.

## Claims

1. Method for operating a brake system (1) having hydraulically actuatable wheel brakes (8, 9, 10, 11), which comprises an electrically controllable pressure supply device (5), which is separably connected to the wheel brakes (8, 9, 10, 11), a master brake cylinder (2) which can be actuated by means of a brake pedal and which is separably connected to the wheel brakes (8, 9, 10, 11), and a brake fluid reservoir (4) having a first and a second reservoir chamber (61, 62) which are separated by a first partition wall (64), wherein the first reservoir chamber (61) is connected to the pressure supply device (5) via a first port (66) for fluid removal, via which the pressure supply device (5) is supplied with pressure medium, and the second reservoir chamber (62) is connected to the master brake cylinder (2) via a second port (67) for fluid removal, via which the master brake cylinder (2) is supplied with pressure medium, wherein a first filling level in the brake fluid reservoir (4) is determined by means of a first sensor element (71), and a second filling level in the brake fluid reservoir (4) is determined by means of a second sensor element (72),
**characterized in that** the brake system (1) is operated in a first fallback operating mode (51) when the determined first filling level in the brake fluid reservoir (4) falls (50) below a first predetermined level (p₁), and **in that** the brake system (1) is operated in a second fallback operating mode (56, 57) when the determined second filling level in the brake fluid reservoir falls (52) below a second predetermined level (p₂), wherein the second level (p₂) is lower than the first level (p₁).

2. Method according to Claim 1, **characterized in that** the first sensor element (71) detects the first filling level in a first region, wherein the first region is situated above the first partition wall (64) .

3. Method according to Claim 1 or 2, **characterized in that** the second sensor element (72) detects the second filling level in a second region, wherein the second region is situated in the second reservoir chamber (62).

4. Method according to one of the preceding claims, **characterized in that** the first and the second sensor element (71, 72) are configured to be separate, or **in that** the first and second sensor element (71, 72) are arranged in a common sensor device (74).

5. Method according to one of the preceding claims, **characterized in that**, in the first fallback operating mode, the pressure supply device (5) is separated from the wheel brakes (8, 9, 10, 11) and the master brake cylinder (2) is connected to the wheel brakes (8, 9, 10, 11), with the result that brake pressure in the wheel brakes (8, 9, 10, 11) is provided by the master brake cylinder (2).

6. Method according to one of the preceding claims, **characterized in that**, in the second fallback operating mode, the master brake cylinder (2) is separated from the wheel brakes (8, 9, 10, 11) and the pressure supply device (5) is connected to at least some of the wheel brakes (8, 9 or 10, 11), and brake pressure for actuating some of the wheel brakes is provided by the pressure supply device (5).

7. Method according to one of the preceding claims, **characterized in that**, in the second fallback operating mode, a first and/or a second wheel brake (8, 9) of the wheel brakes are/is hydraulically separated from the pressure supply device (5).

8. Method according to one of the preceding claims, **characterized in that** the master brake cylinder (2) comprises a first and a second pressure space (17, 18), wherein the second pressure space (18) is connected to the second port (67), **in that** the brake fluid reservoir (4) comprises a third reservoir chamber (63) which is separated by a second partition wall (65), wherein the first pressure space (17) is connected to the third reservoir chamber (63) via a third port (68) for fluid removal, and **in that** a third filling level in the brake fluid reservoir is detected by means of a third sensor element (73).

9. Method according to Claim 8, **characterized in that** the first pressure space (17) is separably connected to the first brake circuit, wherein at least one of the wheel brakes is connected to the first brake circuit, and **in that** the second pressure space (18) is separably connected to a second brake circuit, wherein at least one other of the wheel brakes is connected to the second brake circuit, and **in that** the pressure supply device (5) is separably connected to the first brake circuit and the pressure supply device (5) is separably connected to the second brake circuit.

10. Method according to Claim 8 or 9, **characterized in that** the third sensor element (73) detects the third filling level in a third region, wherein the third region is situated in the third reservoir chamber (63).

11. Method according to one of Claims 8 to 10 when referring back to Claim 2, **characterized in that** the first region is situated above the second partition wall (65).

12. Method according to one of Claims 9 to 11, **characterized in that** the brake system (1) is operated in the second fallback operating mode when the determined third filling level in the brake fluid reservoir falls below a third predetermined level (p₃).

13. Method according to Claim 12, **characterized in that**, in the second fallback operating mode, the first brake circuit is hydraulically separated from the pressure supply device (5) if the determined third filling level in the brake fluid reservoir falls below the third predetermined level (_{P3}), and the second brake circuit is hydraulically separated from the pressure supply device (5) if the determined second filling level in the brake fluid reservoir falls below the second predetermined level (p₂).

14. Method according to one of the preceding claims, **characterized in that**, in the first fallback operating mode, all those control functions by which pressure medium is transferred from one of the reservoir chambers (61, 62, 63) into another of the reservoir chambers (61, 62, 63) are switched off.

15. Method according to one of the preceding claims, **characterized in that**, in the second fallback operating mode, all those control functions by which pressure medium is transferred from one of the reservoir chambers (61, 62, 63) into another of the reservoir chambers are switched off.

16. Brake system (1) having hydraulically actuatable wheel brakes (8, 9, 10, 11), which comprises an electrically controllable pressure supply device (5), which is separably connected to the wheel brakes (8, 9, 10, 11), a master brake cylinder (2) which can be actuated by means of a brake pedal and which is separably connected to the wheel brakes (8, 9, 10, 11), and a brake fluid reservoir (4) having a first and a second reservoir chamber (61, 62) which are separated by a first partition wall (64), wherein the first reservoir chamber (61) is connected to the pressure supply device (5) via a first port (66) for fluid removal, via which the pressure supply device (5) is supplied with pressure medium, and the second reservoir chamber (62) is connected to the master brake cylinder (2) via a second port (67) for fluid removal, via which the master brake cylinder (2) is supplied with pressure medium, wherein the brake fluid reservoir (4) comprises a first sensor element (71) for determining a first filling level, and the brake fluid reservoir comprises a second sensor element (72) for determining a second filling level, **characterized in that** the brake system (1) is operated in a first fallback operating mode when the determined first filling level in the brake fluid reservoir falls below a first predetermined level (p₁), and **in that** the brake system (1) is operated in a second fallback operating mode when the determined second filling level in the brake fluid reservoir falls below a second predetermined level (p₂), wherein the second level (p₂) is lower than the first level (p₁).

17. Brake system according to Claim 16, **characterized in that** a method according to one of Claims 2 to 15 is carried out.

18. Brake system (1) according to Claim 16, **characterized in that** the master brake cylinder (2) comprises a first and a second pressure space (17, 18), wherein the second pressure space (18) is connected to the second port (67), **in that** the brake fluid reservoir (4) comprises a third reservoir chamber (63) which is separated by a second partition wall (65), wherein the first pressure space (17) is connected to the third reservoir chamber (63) via a third port (68) for fluid removal, and **in that** the brake fluid reservoir (4) comprises a third sensor element (73) for determining a third filling level, and **in that** the first pressure space (17) is separably connected to a first brake circuit via a first isolation valve (23a), wherein a first and a second wheel brake (8, 9) are connected to the first brake circuit, and **in that** the second pressure space (18) is separably connected via a second isolation valve (23b) to a second brake circuit, wherein a third and a fourth wheel brake (10, 11) are connected to the second brake circuit, and **in that** the pressure supply device (5) is separably connected via a first sequence valve (26a) to the first brake circuit, and the pressure supply device is separably connected via a second sequence valve (26b) to the second brake circuit.

19. Brake system (1) according to one of Claims 16 to 18, **characterized in that** the first sensor element (71) is situated above the first partition wall (64), and **in that** the second sensor element (72) is situated in the second reservoir chamber (62).

## Revendications

1. Procédé permettant de faire fonctionner un système de freinage (1) doté de freins de roue (8, 9, 10, 11) à actionnement hydraulique qui comprend un dispositif de fourniture de pression (5) à commande électrique qui est relié de manière séparable aux freins de roue (8, 9, 10, 11), un maître-cylindre de frein (2) pouvant être actionné au moyen d'une pédale de frein et qui est relié de manière séparable aux freins de roue (8, 9, 10, 11), et un réservoir de liquide de frein (4) doté d'une première et d'une deuxième chambre de réservoir (61, 62) qui sont séparées par une première cloison étanche (64), la première chambre de réservoir (61) étant reliée au dispositif de fourniture de pression (5) par un premier raccord (66) de prélèvement de liquide par lequel le dispositif de fourniture de pression (5) est alimenté en fluide sous pression, et la deuxième chambre de réservoir (62) étant reliée au maître-cylindre de frein (2) par un deuxième raccord (67) de prélèvement de liquide par lequel le maître-cylindre de frein (2) est alimenté en fluide sous pression, un premier niveau de remplissage dans le réservoir de liquide de frein (4) étant établi au moyen d'un premier élément capteur (71), et un deuxième niveau de remplissage dans le réservoir de liquide de frein (4) étant établi au moyen d'un deuxième élément capteur (72),
**caractérisé en ce que** le système de freinage (1) fonctionne dans un premier mode de fonctionnement de repli (51) lorsque le premier niveau de remplissage déterminé dans le réservoir de liquide de frein (4) descend (50) sous un premier niveau prédéfini (p₁), et **en ce que** le système de freinage (1) fonctionne dans un deuxième mode de fonctionnement de repli (56, 57) lorsque le deuxième niveau de remplissage déterminé dans le réservoir de liquide de frein descend (52) sous un deuxième niveau prédéfini (p₂), le deuxième niveau (p₂) étant inférieur au premier niveau (p₁).

2. Procédé selon la revendication 1, **caractérisé en ce que** le premier élément capteur (71) détecte le premier niveau de remplissage dans une première zone, la première zone se trouvant au-dessus de la première cloison étanche (64).

3. Procédé selon la revendication 1 ou 2, **caractérisé en ce que** le deuxième élément capteur (72) détecte le deuxième niveau de remplissage dans une deuxième zone, la deuxième zone se trouvant dans la deuxième chambre de réservoir (62).

4. Procédé selon l'une quelconque des revendications précédentes, **caractérisé en ce que** le premier et le deuxième élément capteur (71, 72) sont réalisés séparément, ou **en ce que** le premier et le deuxième élément capteur (71, 72) sont disposés dans un dispositif capteur commun (74).

5. Procédé selon l'une quelconque des revendications précédentes, **caractérisé en ce que** dans le premier mode de fonctionnement de repli, le dispositif de fourniture de pression (5) est séparé des freins de roue (8, 9, 10, 11) et le maître-cylindre de frein (2) est relié aux freins de roue (8, 9, 10, 11) de sorte que la pression de freinage dans les freins de roue (8, 9, 10, 11) est fournie par le maître-cylindre de frein (2).

6. Procédé selon l'une quelconque des revendications précédentes, **caractérisé en ce que** dans le deuxième mode de fonctionnement de repli, le maître-cylindre de frein (2) est séparé des freins de roue (8, 9, 10, 11) et le dispositif de fourniture de pression (5) est relié à au moins une partie des freins de roue (8, 9 ou 10, 11) et la pression de freinage pour l'actionnement de la partie des freins de roue est fournie par le dispositif de fourniture de pression (5).

7. Procédé selon l'une quelconque des revendications précédentes, **caractérisé en ce que** dans le deuxième mode de fonctionnement de repli, un premier et/ou un deuxième frein de roue (8, 9) des freins de roue est/sont séparé(s) hydrauliquement du dispositif de fourniture de pression (5).

8. Procédé selon l'une quelconque des revendications précédentes, **caractérisé en ce que** le maître-cylindre de frein (2) comprend une première et une deuxième chambre de pression (17, 18), la deuxième chambre de pression (18) étant reliée au deuxième raccord (67), **en ce que** le réservoir de liquide de frein (4) comprend une troisième chambre de réservoir (63) qui est séparée par une deuxième cloison étanche (65), la première chambre de pression (17) étant reliée par un troisième raccord (68) de prélèvement de liquide à la troisième chambre de réservoir (63), et **en ce qu'**un troisième niveau de remplissage dans le réservoir de liquide de frein est détecté au moyen d'un troisième élément capteur (73).

9. Procédé selon la revendication 8, **caractérisé en ce que** la première chambre de pression (17) est reliée de manière séparable à un premier circuit de freinage, au moins l'un des freins de roue étant raccordé au premier circuit de freinage, et **en ce que** la deuxième chambre de pression (18) est reliée de manière séparable à un deuxième circuit de freinage, au moins un autre des freins de roue étant raccordé au deuxième circuit de freinage, et **en ce que** le dispositif de fourniture de pression (5) est relié de manière séparable au premier circuit de freinage et le dispositif de fourniture de pression (5) est relié de manière séparable au deuxième circuit de freinage.

10. Procédé selon la revendication 8 ou 9, **caractérisé en ce que** le troisième élément capteur (73) détecte le troisième niveau de remplissage dans une troisième zone, la troisième zone se trouvant dans la troisième chambre de réservoir (63).

11. Procédé selon l'une quelconque des revendications 8 à 10 lorsqu'elle dépend de la revendication 2, **caractérisé en ce que** la première zone se trouve au-dessus de la deuxième cloison étanche (65).

12. Procédé selon l'une quelconque des revendications 9 à 11, **caractérisé en ce que** le système de freinage (1) fonctionne dans le deuxième mode de fonctionnement de repli lorsque le troisième niveau de remplissage déterminé dans le réservoir de liquide de frein descend sous un troisième niveau prédéfini (p₃).

13. Procédé selon la revendication 12, **caractérisé en ce que** dans le deuxième mode de fonctionnement de repli, le premier circuit de freinage est séparé hydrauliquement du dispositif de fourniture de pression (5) si le troisième niveau de remplissage déterminé dans le réservoir de liquide de frein descend sous le troisième niveau prédéfini (p₃), et le deuxième circuit de freinage est séparé hydrauliquement du dispositif de fourniture de pression (5) si le deuxième niveau de remplissage déterminé dans le réservoir de liquide de frein descend sous le deuxième niveau prédéfini (p₂).

14. Procédé selon l'une quelconque des revendications précédentes, **caractérisé en ce que** dans le premier mode de fonctionnement de repli, toutes celles des fonctions de régulation par lesquelles le fluide sous pression est transféré d'une des chambres de réservoir (61, 62, 63) dans une autre des chambres de réservoir (61, 62, 63) sont désactivées.

15. Procédé selon l'une quelconque des revendications précédentes, **caractérisé en ce que** dans le deuxième mode de fonctionnement de repli, toutes celles des fonctions de régulation par lesquelles le fluide sous pression est transféré d'une des chambres de réservoir (61, 62, 63) dans une autre des chambres de réservoir sont désactivées.

16. Système de freinage (1) doté de freins de roue (8, 9, 10, 11) à actionnement hydraulique qui comprend un dispositif de fourniture de pression (5) à commande électrique qui est relié de manière séparable aux freins de roue (8, 9, 10, 11), un maître-cylindre de frein (2) pouvant être actionné au moyen d'une pédale de frein et qui est relié de manière séparable aux freins de roue (8, 9, 10, 11), et un réservoir de liquide de frein (4) doté d'une première et d'une deuxième chambre de réservoir (61, 62) qui sont séparées par une première cloison étanche (64), la première chambre de réservoir (61) étant reliée au dispositif de fourniture de pression (5) par un premier raccord (66) de prélèvement de liquide par lequel le dispositif de fourniture de pression (5) est alimenté en fluide sous pression, et la deuxième chambre de réservoir (62) étant reliée au maître-cylindre de frein (2) par un deuxième raccord (67) de prélèvement de liquide par lequel le maître-cylindre de frein (2) est alimenté en fluide sous pression, le réservoir de liquide de frein (4) comprenant un premier élément capteur (71) pour établir un premier niveau de remplissage, et le réservoir de liquide de frein comprenant un deuxième élément capteur (72) pour établir un deuxième niveau de remplissage,
**caractérisé en ce que** le système de freinage (1) fonctionne dans un premier mode de fonctionnement de repli lorsque le premier niveau de remplissage déterminé dans le réservoir de liquide de frein descend sous un premier niveau prédéfini (p₁), et **en ce que** le système de freinage (1) fonctionne dans un deuxième mode de fonctionnement de repli lorsque le deuxième niveau de remplissage déterminé dans le réservoir de liquide de frein descend sous un deuxième niveau prédéfini (p₂), le deuxième niveau (p₂) étant inférieur au premier niveau (p₁).

17. Système de freinage selon la revendication 16, **caractérisé en ce qu'**un procédé selon l'une quelconque des revendications 2 à 15 est exécuté.

18. Système de freinage (1) selon la revendication 16, **caractérisé en ce que** le maître-cylindre de frein (2) comprend une première et une deuxième chambre de pression (17, 18), la deuxième chambre de pression (18) étant reliée au deuxième raccord (67), **en ce que** le réservoir de liquide de frein (4) comprend une troisième chambre de réservoir (63) qui est séparée par une deuxième cloison étanche (65), la première chambre de pression (17) étant reliée par un troisième raccord (68) de prélèvement de liquide à la troisième chambre de réservoir (63), et **en ce que** le réservoir de liquide de frein (4) comprend un troisième élément capteur (73) pour déterminer un troisième niveau de remplissage, et **en ce que** la première chambre de pression (17) est reliée de manière séparable à un premier circuit de freinage par une première soupape de séparation (23a), un premier et un deuxième frein de roue (8, 9) étant raccordés au premier circuit de freinage, et **en ce que** la deuxième chambre de pression (18) est reliée de manière séparable par une deuxième soupape de séparation (23b) à un deuxième circuit de freinage, un troisième et un quatrième frein de roue (10, 11) étant raccordés au deuxième circuit de freinage, et **en ce que** le dispositif de fourniture de pression (5) est relié de manière séparable par une première soupape de mise en circuit (26a) au premier circuit de freinage et le dispositif de fourniture de pression est relié de manière séparable par une deuxième soupape de mise en circuit (26b) au deuxième circuit de freinage.

19. Système de freinage (1) selon l'une quelconque des revendications 16 à 18, **caractérisé en ce que** le premier élément capteur (71) se trouve au-dessus de la première cloison étanche (64), et **en ce que** le deuxième élément capteur (72) se trouve dans la deuxième chambre de réservoir (62).
